# EUROPEAN PATENT APPLICATION

(11) **EP 4 847 111 A1**
(43) Date of publication of application: **02.12.2026**
(21) Application number: 26177838.5
(22) Date of filing: 11.05.2026
(51) Int. Cl.: B01D 33/067, B01D 33/04, B01D 33/09, B01D 33/74, D21C 9/06

(54) **VALVE ARRANGEMENT AND PULP FILTER COMPRISING SUCH A VALVE ARRANGEMENT**

(30) Priority: 27.05.2025 SE 2550521
(71) Applicant: VALMET AB, 851 94 Sundsvall (SE)
(72) Inventor: LUNDBERG, Jörgen, 755 98 UPPSALA (SE)
(74) Representative: Groth & Co. KB

(57) **Abstract**

Valve arrangement for a pulp filter comprising a valve housing (1) formed substantially as hollow cylinder, and a valve member (2) disposed radially within said valve housing. The valve housing is arranged rotatable around the valve member. The valve housing is provided with at least first and second sets of radial through openings distributed along respective circumferential lines of the valve housing. The first and second sets of radial through openings are offset relative each other in a circumferential direction of the valve housing. The valve member (2) comprises a sealing plate portion (2a) positioned against an inner surface of said valve housing at the radial through openings (3a-c, 4a-c). A leading edge (2') of the sealing plate portion is provided with at least two protrusions protruding in the sealing direction. The protrusions are arranged axially aligned with a respective set of radial through openings. The protrusions comprise a leading edge facing in the sealing direction, the leading edge being formed adapted to a shape of the through openings.

## Description

### TECHNICAL FIELD

The present invention relates in general to washing and filtering equipment and in particular to valve arrangements for pulp filters.

### BACKGROUND

Drum filters for dewatering pulp are well-known in the art. Such a filter comprises a rotatable drum mounted in a vat provided with pulp suspension. The outer surface of the drum is perforated and allows penetration of liquids. A vacuum, or at least an under-pressure, is applied on the inside of the outer surface of the drum, causing a suction of liquid through the outer surface. The drum filter may therefore be referred to as a vacuum drum filter. The vacuum/under-pressure causes pulp to settle onto the outer surface in the form of a pulp cake. When the drum is rotated, the pulp cake will follow the drum up from the vat and the water content in the pulp cake is reduced by further suction of liquids through the outer surface. Different washing steps can also be provided here.

When the pulp cake is as dry as requested, it is removed from the drum. In order to facilitate this removal, the vacuum is no longer applied during that stage. This is arranged for by a valve arrangement. In other words, in a vacuum filter with a cylindrical valve, there are in general two zones. One zone where the vacuum/under-pressure is applied over the pulp web and drain the pulp web and one zone without vacuum for enabling the release of the pulp web. The zones are defined by the valve arrangement.

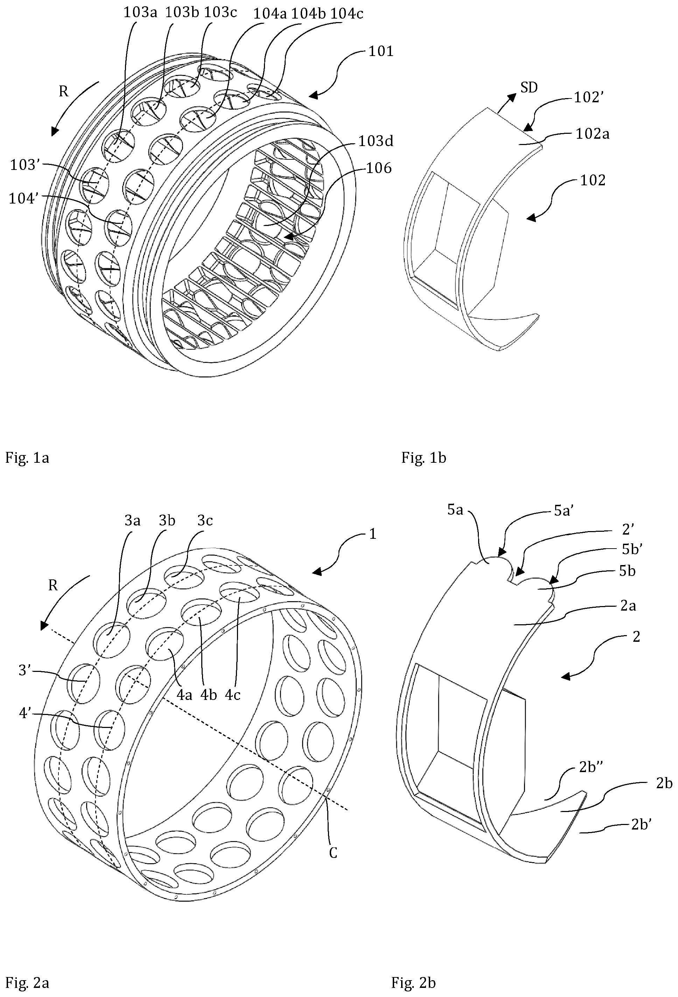

EP3810300B1 discloses a drum filter of the above-described type. The valve arrangement of this filter comprises a rotating valve housing and a non-rotating valve member, the valve housing being formed as shown in fig. 1a. The valve housing is formed with axial slots around its inner circumference, each axial slot connecting to one radial through openings in the periphery of the valve housing, each through opening being connected to a radially extending drain pipe of the filter. Such a valve housing formed with slots is advantageous since the valve member can effectively seal the axial slots which means that leakage between the drain pipes (and thus leakage between the zones) as the drum rotates is minimized. One disadvantage is however that the complex geometry of the valve housing means that it is difficult and expensive to manufacture.

### SUMMARY

An object of the invention is to provide a valve arrangement which is easier to manufacture while maintaining low leakage between the zones. A further object is to provide a pulp filter comprising such a valve arrangement.

These and other objects are achieved by the present invention by means of a valve arrangement and a pulp filter according to the independent claims.

According to a first aspect of the invention, there is provided a valve arrangement for a pulp filter for dewatering cellulosic pulp. The valve arrangement comprises a valve housing formed substantially as hollow cylinder, and a valve member disposed radially within the valve housing. The valve housing is arranged rotatable around a center axis of the valve housing relative to the stationary/non-rotatable valve member. The valve housing is provided with at least two sets of radial through openings, wherein a first set of radial through openings is distributed along a first (imaginary) circumferential line of the valve housing, and a second set of radial through openings is distributed along a second (imaginary) circumferential line of the valve housing, The first and second circumferential lines are disposed in respective planes being parallel with each other and being perpendicular to said center axis of the valve housing, wherein the first and second sets of radial through openings are offset relative each other in a circumferential direction of the valve housing such that each pair of adjacent radial through openings of said first and second sets of radial through openings are positioned at different circumferential positions. The valve member comprises a sealing plate portion positioned against an inner surface of said valve housing at the radial through openings, the sealing plate portion having a curved shape with an outer radius adapted to an inner radius of said valve housing, A leading edge of the sealing plate portion faces in a sealing direction being opposite a rotational direction of the valve housing. The sealing plate portion is provided with at least two protrusions protruding in the sealing direction from the leading edge. A first protrusion is aligned, in an axial direction being parallel to said center axis, with the first set of radial through openings. A second protrusion is aligned in said axial direction with the second set of radial through openings. At least one of the protrusions comprises a leading edge facing in the sealing direction, wherein the leading edge may be formed adapted to a shape of the through openings such as to at last partly seal a respective radial through opening when aligned in the circumferential direction therewith.

In other words, a valve arrangement is provided which comprises a rotatable valve housing and a non-rotatable valve member disposed radially within the valve housing. The valve arrangement is for a pulp filter for dewatering cellulosic pulp, i.e. a pulp filter for reducing the liquid content of the cellulosic pulp. The valve housing comprises at least two sets of radially directed through openings, each set comprising through openings distributed around the circumference of the valve housing. At least two of the sets are offset relative each other in a circumferential direction of the valve housing to allow the sets to be arranged closer to each other as seen in the axial direction (and to achieve a larger flow area) compared to if they were not offset relative each other. The valve member comprises a sealing plate portion positioned against an inner surface of said valve housing at the radial through openings in the sense that it is positioned adjacent to, and at a close distance from, the inner surface. The sealing plate portion has a curved shape with an outer radius adapted to an inner radius of said valve housing in the sense that the outer radius of the sealing plate portion is slightly smaller than the inner radius of the valve housing, for example 2% or 5% smaller, such that the valve housing can freely rotate around the valve member. The leading edge of the sealing plate portion faces in a sealing direction being opposite a rotational direction of the valve housing, i.e. in a tangential direction of the sealing plate portion and opposite the rotational direction. The at least two protrusions protruding in the sealing direction from the leading edge comprises at least a first protrusion and a second protrusion, where the protrusions are aligned with a respective set of radially directed through openings, as seen in an axial direction being parallel to said center axis. One or more, or each, protrusion may be described as having a leading edge facing in the sealing direction, the leading edge being formed adapted to a shape of the through openings such as to at last partly seal a respective radial through opening when aligned in the circumferential direction therewith. Alternatively, one or more, or each, protrusion may be described as being formed (as a whole) adapted to a shape of the through openings such as to at last partly seal a respective radial through opening when aligned in the circumferential direction therewith. It is understood that protrusion, or leading edge thereof, being formed adapted to a shape of the through opening means that it has a shape and dimensions adapted to the through opening. For example, if the through opening is circular, the leading edge may be formed as a circular arc with a radius adapted to the radius of the through opening, but may alternatively be formed by line segments to resemble a circular arc, i.e. the protrusion is a polygon. The leading edges of the protrusions may be described as being adapted to the shape of the edge of the through opening which faces in the rotational direction, which through opening edge may be referred to as a sealing edge.

The invention is based on the insight to provide the leading edge of the valve member with at least a pair of protrusions (one for each set of radial through openings), where the leading edge of the protrusion, or the protrusion as a whole, is adapted to the shape of the corresponding radial through opening. A valve member with such protrusions can seal the radial through openings directly such that a simplified valve housing can be used where no axial slots at its inner circumference are needed, while maintaining low leakage between adjacent drainpipes. Since the leading edge of the valve member is provided with at least a pair of protrusions (one for each set of radial through openings), with the leading edge of the protrusions adapted to the shape of the radial through openings, a first protrusion can (fully) seal a radial through opening of a first set of radial through openings when aligned circumferentially therewith, whereas a second protrusion only covers/seals a small portion of an adjacent radial through opening of a second set of radial through openings. The invention is furthermore based on the insight that by adapting the shape of (the leading edge of) the protrusions to the shape of the radial through openings an advantageous valve characteristic can be achieved where, upon rotation of the valve housing, the valve closing is slow at the beginning and a rapid towards the end.

In embodiments, the protrusions are formed with a width, as seen in said axial direction, being within +-10%, or +- 20%, of the width of the radial through openings. Thereby, the protrusions can seal a corresponding through opening, or at least a large portion thereof.

In embodiments, the radial through openings are substantially circular openings. In such embodiments, the leading edge of the at least one protrusion advantageously has a curved shape as seen in the axial direction. The curved shape advantageously has a curvature adapted to the circular openings. The curved shape may be a circle arc shape having a radius adapted to a radius of the through openings. The radius of the circle arc may be within +-5%, or +-10%, or +-20%, of the radius of the through openings. Thereby, the protrusions can seal along a large portion of the radial through opening edge simultaneously.

In embodiments, the protrusions are formed as, or comprises a portion formed as circular segments, such as half-circles. Thereby, protrusions having a leading edge with a circle arc shape having a radius adapted to a radius of the through openings may be achieved. The radius of the circle arc may be within +-5%, or +-10%, or +-20%, of the radius of the through openings. Thereby, the protrusions can seal along a large portion of the radial through opening edge simultaneously.

In embodiments, the valve member further comprises a valve plate portion positioned against the inner surface of the valve housing, the valve plate portion having a curved shape with an outer radius adapted to an inner radius of said valve housing, said valve plate portion defining a throttle passage having a smaller width, as seen in said axial direction, than the width of the valve member. said valve plate portion defining a throttle passage having a smaller width, as seen in said axial direction, than the width of the valve member. This is advantageous since a smooth transition from non-vacuum/underpressure to vacuum/underpressure is achieved. The throttle passage is advantageously achieved by means of the valve plate portion being tapered in the rotational direction of the valve housing, i.e. in a tangential/circumferential direction of the valve plate portion and in the rotational direction.

The valve plate portion has a curved shape with an outer radius adapted to an inner radius of said valve housing in the sense that the outer radius of the valve plate portion is slightly smaller than the inner radius of the valve housing, typically in the range of 0.1-0.2 mm smaller, such that the valve housing can freely rotate around the valve member. The valve plate portion advantageously has the same outer radius as the sealing plate portion.

According to a second aspect of the invention, there is provided a pulp filter for dewatering cellulosic pulp, comprising a rotatable drum enclosed by a non-rotating casing, a plurality of drain pipes, a rotatable hollow shaft, and a valve arrangement according to the first aspect of the invention or embodiments thereof. The rotatable drum has a cylindrical water-permeable pulp-supporting shell. A hollow interior of the rotatable hollow shaft is adapted to be connected to an underpressure-providing arrangement. The valve housing of the valve arrangement is attached to the hollow shaft to rotate therewith, wherein a hollow interior of the valve housing is in fluid communication with the hollow interior of the hollow shaft. The plurality of drain pipes are connected between a respective through opening of the valve housing and a collecting channel situated radially directly inside the cylindrical water-permeable pulp-supporting shell, thereby enabling a drain of liquid, passing radially inwards through said cylindrical water-permeable pulp-supporting shell through said rotating hollow shaft. The pulp filter may comprise an underpressure-providing arrangement connected to the rotatable shaft.

In embodiments, the sealing plate portion of the valve member is arranged for sealing off the hollow interior of the valve housing from one or more radial through openings and the thereto connected one or more drainpipes when said one or more radial through openings, during rotation of said rotatable drum in a rotation direction, is situated within a sealed zone.

In embodiments wherein the valve member comprises a valve plate portion, the valve plate portion of the valve member is arranged to, in a transition zone following said sealed zone in said rotation direction, open a throttled passage between said hollow shaft and one or more radial through openings and the thereto connected one or more drain pipes.

The features of the embodiments described above are combinable in any practically realizable way to form embodiments having combinations of these features. Further, all features and advantages of embodiments described above with reference to the first aspect of the invention may be applied in corresponding embodiments of the system according to the second aspect of the invention and vice versa.

### BRIEF DESCRIPTION OF THE DRAWINGS

Above discussed and other aspects of the present invention will now be described in more detail using the appended drawings, which show presently preferred embodiments of the invention, wherein:
fig. 1a-b shows a prior art valve arrangement for a pulp filter where fig. 1a shows the valve housing and fig. 1b shows the valve member;
fig. 2a-b shows an embodiment of the valve arrangement according to the invention where fig. 2a shows the valve housing and fig. 2b shows the valve member;
fig. 2c shows the valve arrangement in fig. 2a-b with the valve member being disposed within the valve housing to co-act therewith;
fig. 3 shows a valve housing of another embodiment of the valve arrangement according to the invention, and
fig. 4 shows an embodiment of the pulp filter according to the invention.

### DETAILED DESCRIPTION

Fig. 1a-b shows a prior art valve arrangement for a pulp filter where fig. 1a shows the valve housing and fig. 1b shows the valve member. The valve housing 101 is formed substantially as hollow cylinder. The valve member 102 is shown separately, but when in operation it is disposed radially within the valve housing 101. The valve housing is arranged rotatable around a center axis of the valve housing relative to the valve member. The valve housing 101 is provided with two sets of radially directed circular through holes/openings, wherein a first set of radial through holes/openings (103a-c for example) is distributed along a first imaginary circumferential line 103' of the valve housing, and a second set of radial through openings (104a-c for example) is distributed along a second imaginary circumferential line 104' of the valve housing. The first and second circumferential imaginary lines 103', 104' are disposed in respective planes being parallel with each other and being perpendicular to said center axis of the valve housing. The first and second sets of radial through openings are offset relative each other in the circumferential/rotational direction of the valve housing 101 such that each pair of adjacent radial through openings of the first and second sets of radial through openings are positioned at different circumferential positions, For example as can be seen in fig. 1a, the radial through opening 104a is disposed at a circumferential position being between the circumferential positions of radial through openings 103b and 103c.

The valve housing 101 is formed with axial slots (106 for example) around its inner circumference, each axial slot connecting to only one radial through opening (106 is connected only through opening 103d for example), as can be seen in fig. 1a. To achieve such axial slots being connected to one radial through opening but being sealed from adjacent through openings, the valve housing is manufactured by means of casting/molding.

The valve member 102 comprises a sealing plate portion 102a adapted to positioned against an inner surface of the valve housing at the radial through openings 103a-c, 104a-c, the sealing plate portion having a curved shape with an outer radius adapted to (slightly smaller than) an inner radius of the valve housing 101. A leading edge 102' of the sealing plate portion 102a faces in a sealing direction SD being opposite a rotational direction R of the valve housing. The leading edge 102' is straight and extends in an axial direction in parallel with the rotational axis of the valve housing 101 such as to effectively seal an axial slot being circumferentially aligned therewith along the full axial length of the axial slot.

Fig. 2a-b shows an embodiment of the valve arrangement according to the invention where fig. 2a shows the valve housing 1 and fig. 2b shows the valve member 2. In a corresponding manner as shown in fig. 1a and described above, the valve housing comprises first and second sets of radially directed circular through holes/openings (3a-c, 4a-c for example) distributed along respective imaginary circumferential lines 3', 4' of the valve housing. The sets of through openings are offset relative each other as described above concerning fig. 1a. Apart from this similarity, the valve housing 1 in fig. 2a is significantly simplified compared to the valve housing in fig. 1a in the sense that the valve housing 1 does not comprise any axial slots at its inner surface. Thereby, the valve housing 1 can be produced in a simplified manner for example by means of being machined out from a hollow shaft or formed from two halves of bended plates that are welded together.

The valve member 2 corresponds to the valve member 102 in fig. 1b, but with the difference being that the sealing plate portion 2a is provided with two protrusions 5a-b protruding in the sealing direction SD from the leading edge 2'. The first protrusion 5a is aligned, in an axial direction being parallel to the center axis C of the valve housing 1, with the first set of radial through holes/openings (3a-c for example). The second protrusion 5b is aligned in the axial direction with the second set of radial through holes/openings (4a-d for example). The protrusions form part of the sealing plate portion and are thus curved with the same outer radius as the rest of the sealing plate portion (adapted to an inner radius of the valve housing 1).

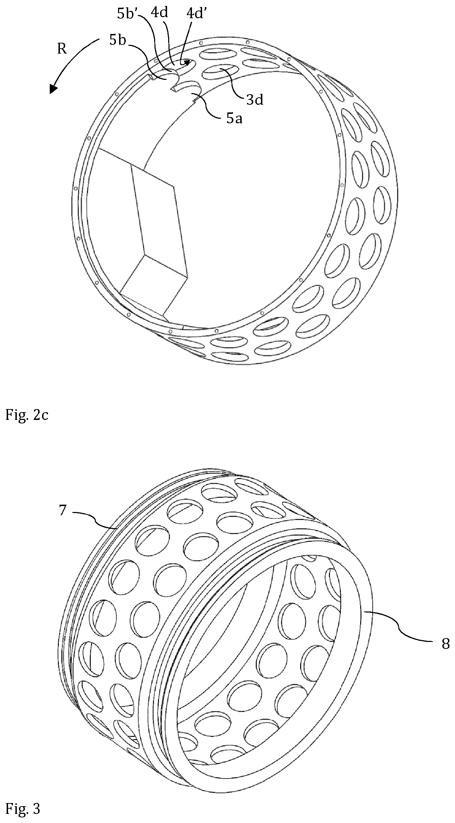

The protrusions 5a, 5b are formed as half-circles with a radius being equal to that of the through holes/openings (3a-c, 4a-c for example). Thereby, the leading edges 5a', 5b' (facing in the sealing direction) of the protrusions are formed adapted to the shape of the through openings, or more specifically adapted to the shape of the through hole/opening edge (4d' for example, see fig. 2c) facing in the rotational direction, which edge may be referred to as a sealing edge.

The valve member further comprises a valve plate portion 2b positioned against the inner surface of the valve housing 1, the valve plate portion having a curved shape with an outer radius adapted to the inner radius of the valve housing, the valve plate portion defining throttled passages 2b', 2b" having an overall smaller width, as seen in the axial direction, than the width of the valve member.

Fig. 2c shows the valve arrangement in fig. 2a-b with the valve member being disposed within the valve housing to co-act therewith. In the rotational position shown in in fig. 2c, the protrusion 5a has just covered/sealed a through hole/opening of the first set of through holes/openings which precedes through hole/opening 3d as seen in the rotational direction R, whereas the protrusion 5b, due to its half-circular shape, only covers a small portion of the adjacent through hole/opening 4d of the second set of through holes/openings. As the valve housing rotates further in direction R, through hole/opening 3d will reach protrusion 5a and slowly start to close 3d, while simultaneously through hole/opening 4d is still slightly open but will close rapidly due to the leading edge 5b' having a corresponding shape as the sealing edge 4d' of the through hole/opening. 4d, thus sealing along the whole sealing edge simultaneously. Thus, for a very short time, there will be a slight leakage between 3d and 4d while 4d is (rapidly) closed, but significantly less than if the leading edge of the valve member was not provided with protrusions (as in fig. 1b).

Fig. 3 shows a valve housing of another embodiment of the valve arrangement according to the invention. In this embodiment, the valve housing is provided with axially and radially inwardly protruding flanges 7, 8 around the circumference at both axial ends of the valve housing. The flanges provide a more stable valve housing. The embodiment in fig. 3 is more complex to manufacture than the valve housing in fig. 2a but is still possible to manufacture by machining a hollow shaft and thus does not require casting/molding as the valve housing shown in fig. 1a.

The valve housing in fig. 3 together with the valve member 2 in fig. 2b may form an embodiment of the valve arrangement according to the invention.

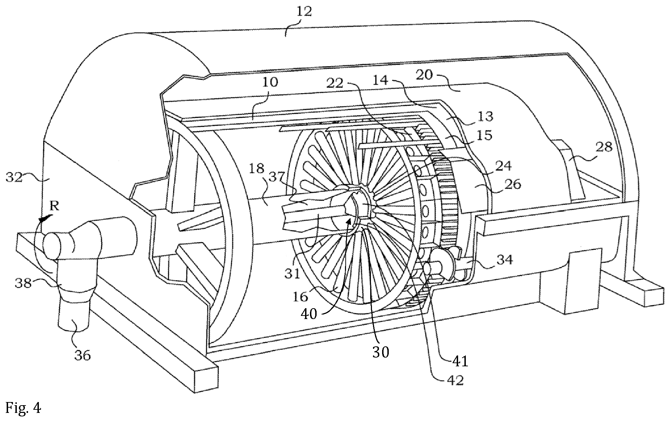

Figure 4 shows an embodiment of the pulp filter according to the invention. Some parts are illustrated as transparent/broken away to see relevant parts of the pulp filter. The pulp filter comprises a rotatable drum 10 enclosed by a non-rotating casing 12. The rotatable drum 10 has a pulp supporting shell 14, a plurality of drain pipes 16 and a rotating hollow shaft 18. The pulp-supporting shell 14 is cylindrical and water-permeable. In this particular embodiment, the pulp-supporting shell 14 comprises a mantle decking 13 and a filter wire 15.

The drain pipes 16 each fluidically connect the rotating hollow shaft 18 with a respective collecting channel (22 for example). The collecting channels 22 are situated radially directly inside the pulp-supporting shell 14. The collecting channels 22 thereby enable a drain of liquid, passing radially inwards through the pulp-supporting shell 14. The liquid is drained through the rotating hollow shaft 18.

An underpressure-providing arrangement 36/38 is arranged to provide an underpressure within a hollow part 37 of the rotating hollow shaft 18.

The pulp suspension is provided in a vat 32, surrounding the lower part of the rotatable drum 10. The underpressure of the hollow part 37 of the rotating hollow shaft 18 is provided to the collecting channel 22 via the drain pipes 16, resulting in that liquids from the pulp suspension is drawn through the pulp-supporting shell 14. This causes pulp to settle against the pulp-supporting shell 14, starting to build up a pulp web 20. When a portion of the pulp-supporting shell 14, upon rotation of the rotatable drum 10 in a rotation direction R, leaves the vat 32, the pulp supporting shell 14 is covered by a pulp web 20.

After the pulp web 20 has been dewatered / liquid has been drained therefrom, the pulp web 20 is removed from the pulp-supporting shell 14 by a take-off device 28 comprising e.g. a doctor blade 26. The removed and possibly cut pulp web is transported out from the pulp filter by a screw conveyor 34. The removal of the pulp web is facilitated by providing an underpressure/vacuum free zone or a sealed zone at the sectors where the removal is performed.

The pulp filter comprises a valve arrangement comprising a valve housing 30 attached to the hollow shaft 18 (to rotate therewith) and a valve member 40 disposed within the rotating hollow shaft 18. The valve member is attached to, and is supported by, a non-rotating valve shaft 31 parallel to the rotating hollow shaft 18.

The valve housing 30 is of the same type shown in fig. 2a and described above. The hollow interior of the valve housing is in fluid communication with said hollow interior of the hollow shaft 18. Each radially directed through hole/opening (24 for example) of the valve housing is connected to a respective drain pipe 16 to provide the above-described fluid connection between the rotating hollow shaft 18 and the collecting channels 22.

The valve member 40 corresponds to the valve member in fig. 2b in the sense that it comprises a sealing plate portion 41 and a valve plate portion 42 (corresponding to 2a and 2b, respectively), and differs only in that there is no intermediate portion between the sealing plate portion and the valve plate portion. Both plate portions 41, 42 are positioned against an inner surface 17 of the valve housing 30 at the radial through openings. The sealing plate portion and the plate portion 42 both have a curved shape (which may be described as being shape as part of a cylinder) with an outer radius adapted to an inner radius of said valve housing,

The sealing plate portion 41 is arranged for sealing off the hollow part 37 of the rotating hollow shaft 18 from the drain pipes 16. This sealing off is provided when the radially directed through holes/openings (24 for example) of the valve housing 30, during rotation of the rotatable drum 10 in the rotation direction R, are situated within a sealed zone defined by the sealing plate portion. The sealed zone comprises sectors where the pulp web 20 is removed by means of the take-off device 28 (and sectors preceding the take-off device as seen in the rotational direction).

As can be seen in fig. 4, the sealing plate portion is provided with two protrusions at the leading edge thereof. The description above concerning the sealing plate portion in fig. 2b (and its protrusions and their relation to the radially directed through holes/openings) applies to sealing plate portion 41 too.

The valve plate portion 42 is arranged to provide a transition zone immediately following the sealed zone in the rotation direction R. In the transition zone, a gradual transition from the non-vacuum/underpressure in the sealed zone to vacuum/underpressure is provided. This is achieved by means of the valve plate portion 42 being formed with throttled passages as shown in fig. 2b. The description above concerning the valve plate portion in fig. 2b (and its throttled passages) applies to valve plate portion 42 too.

The main difference between the pulp filter shown in fig. 4 and the pulp filter described in EP3810300B1 is that the valve arrangement is different. The basic operation of the pulp filter is the same though, so the (more detailed) description of the sealed zone and the transition zone in EP3810300B1 applies also to the pulp filter in fig. 4.

The description above and the appended drawings are to be considered as non-limiting examples of the invention. The person skilled in the art realizes that several changes and modifications may be made within the scope of the invention. For example, the protrusions of the sealing plate portion do not need to be exactly half-circled shaped with a corresponding radius as the through holes/openings in the valve housing but may have another shape as long as the leading edge of the protrusion is formed adapted to the shape of the through holes/openings. Furthermore, the valve housing may have more than two sets of radial through openings, such as four sets, and the valve member then advantageously has the corresponding number of protrusions, such as four protrusions.

## Claims

1. A valve arrangement for a pulp filter for dewatering cellulosic pulp, said valve arrangement comprising:
- a valve housing (1) formed substantially as hollow cylinder, and
- a valve member (2) disposed radially within said valve housing (1),
wherein said valve housing is arranged rotatable around a center axis of the valve housing relative to the valve member,
wherein said valve housing is provided with at least two sets of radial through openings, wherein a first set of radial through openings (3a-c) is distributed along a first imaginary circumferential line of the valve housing, and a second set of radial through openings (4a-c) is distributed along a second imaginary circumferential line of the valve housing, said first and second circumferential imaginary lines being disposed in respective planes being parallel with each other and being perpendicular to said center axis of the valve housing, wherein the first and second sets of radial through openings are offset relative each other in a circumferential direction of the valve housing such that each pair of adjacent radial through openings of said first and second sets of radial through openings are positioned at different circumferential positions,
wherein said valve member (2) comprises a sealing plate portion (2a) positioned against an inner surface of said valve housing at the radial through openings (3a-c, 4a-c), said sealing plate portion having a curved shape with an outer radius adapted to an inner radius of said valve housing,
wherein a leading edge (2') of the sealing plate portion faces in a sealing direction being opposite a rotational direction (R) of the valve housing, the sealing plate portion being provided with at least two protrusions protruding in said sealing direction from said leading edge, wherein a first protrusion is aligned, in an axial direction being parallel to said center axis, with the first set of radial through openings, and wherein a second protrusion is aligned in said axial direction with the second set of radial through openings,
wherein at least one of the protrusions comprises a leading edge facing in said sealing direction, said leading edge being formed adapted to a shape of the through openings such as to at last partly seal a respective radial through opening when aligned in the circumferential direction therewith.

2. The valve arrangement according to claim 1, wherein said protrusions (4) are formed with a width, as seen in said axial direction, being within +- 20% of the width of the radial through openings.

3. The valve arrangement according to any of the preceding claims, wherein said radial through openings (3a-c, 4a-c) are substantially circular openings.

4. The valve arrangement according to claim 3, wherein said leading edge of the at least one protrusion has a curved shape as seen in the axial direction.

5. The valve arrangement according to claim 4, wherein said curved shape is a circle arc shape having a radius adapted to a radius of the through openings.

6. The valve arrangement according to claim 4, wherein said curved shape is a circle arc shape having a radius within +-20% of the radius of the through openings.

7. The valve arrangement according to claims 5 or 6, wherein said protrusions are formed as circular segments, such as half-circles.

8. The valve arrangement according to any of the preceding claims, wherein said valve member further comprises a valve plate portion (2b) positioned against said inner surface of said valve housing (1), said valve plate portion having a curved shape with an outer radius adapted to an inner radius of said valve housing, said valve plate portion defining a throttle passage (2b', 2b") having a smaller width, as seen in said axial direction, than the width of the valve member.

9. A pulp filter for dewatering cellulosic pulp, comprising:
- a rotatable drum (10) enclosed by a non-rotating casing (12), said rotatable drum having a cylindrical water-permeable pulp-supporting shell (14);
- a plurality of drain pipes (16);
- a rotatable hollow shaft (18), wherein a hollow interior thereof is adapted to be connected to an underpressure-providing arrangement (36, 38);
- a valve arrangement according to any of the preceding claims, wherein the valve housing (30) is attached to said hollow shaft (18) to rotate therewith, wherein a hollow interior of said valve housing is in fluid communication with said hollow interior of the hollow shaft,
said plurality of drain pipes (16) being connected between a respective through opening (24) of said valve housing and a collecting channel (22) situated radially directly inside said cylindrical water-permeable pulp-supporting shell, thereby enabling a drain of liquid, passing radially inwards through said cylindrical water-permeable pulp-supporting shell through said rotatable hollow shaft.

10. The pulp filter according to claim 9, wherein said sealing plate portion (41) of the valve member (40) is arranged for sealing off the hollow interior of the valve housing from one or more radial through openings and the thereto connected one or more drain pipes (16) when said one or more radial through openings (24), during rotation of said rotatable drum in a rotation direction (R), is situated within a sealed zone.

11. The pulp filter according to claim 10, wherein said valve plate portion (41) of the valve member is arranged to, in a transition zone following said sealed zone in said rotation direction (R), open a throttled passage between said hollow shaft (18) and one or more radial through openings (24) and the thereto connected one or more drain pipes (16).

12. The pulp filter according to any of claims 9-11, further comprising said underpressure-providing arrangement (36, 38) connected to said rotatable shaft (18).
